# EUROPÄISCHE PATENTSCHRIFT

(11) **EP 0 356 640 B1**
(45) Veröffentlichungstag und Bekanntmachung des Hinweises auf die Patenterteilung: **25.08.1993**
(21) Anmeldenummer: 89111052.0
(22) Anmeldetag: 19.06.1989
(51) Int. Cl.: B60J 7/20

(54) **Versenkbares Verdeck, insbesondere für Kraftfahrzeuge**
Submerging folding top especially for motor cars
Capote escamotable, notamment pour véhicules automobiles

(30) Priorität: 30.08.1988 DE 3829346
(43) Veröffentlichungstag der Anmeldung: 07.03.1990
(73) Patentinhaber: Dr.Ing.h.c. F. Porsche Aktiengesellschaft, 70435 Stuttgart (DE)
(72) Erfinder: Eyb, Wolfgang, Dipl.-Ing., D-7250 Leonberg (DE)

(56) Entgegenhaltungen:
- DE-B- 1 179 125
- US-A- 2 807 496

## Beschreibung

Die Erfindung betrifft ein versenkbares Verdeck, insbesondere für Kraftfahrzeuge, gemäß dem Oberbegriff des Anspruchs 1.

Aus der DE-AS 1 179 125 geht ein Kraftfahrzeug mit einem Verdeck hervor, wobei das Verdeck von einer Schließstellung in eine versenkte, zurückgeklappte Stellung bewegbar ist und umgekehrt. Zur Unterbringung des zurückgeklappten Verdecks ist im Heckbereich benachbart des Kofferraums ein Verdeckkasten vorgesehen, der sich aus einem Boden und aufrechten Seitenwandungen zusammensetzt. Der Verdeckkasten ist nach oben hin durch einen schwenkbaren Deckel verschließbar. Der Boden und die Seitenwandungen sind bei diesem Verdeckkasten starr ausgebildet und bilden einen Teil des Rohbaus. Nachteilig an dieser Anordnung ist, daß auch in Schließstellung des Verdecks der Kofferraum durch den Verdeckkasten wesentlich eingeschränkt ist.

Aufgabe der Erfindung ist es, an einem Verdeckkasten solche Vorkehrungen zu treffen, daß das Fassungsvermögen des Kofferraums in Schließstellung des Verdecks vergrößerbar ist.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die zumindest abschnittsweise elastische, nachgiebige Ausbildung des Verdeckkastens dieser bei geschlossenem Verdeck in Höhenrichtung zusammenschiebbar ist, wodurch sich das Fassungsvermögen des Kofferraums bei Bedarf beträchtlich vergrößern läßt.

Ein Ausführungsbeispiel ist in der Zeichnung dargestellt und wird im folgenden näher erläutert.
Es zeigt
- Fig. 1: einen Teillängsschnitt durch den Heckbereich eines Fahrzeuges, dessen Verdeck zusammengeklappt in einem heckseitigen Verdeckkasten angeordnet ist,
- Fig. 2: einen Teillängsschnitt durch den Heckbereich bei geschlossenem Verdeck.

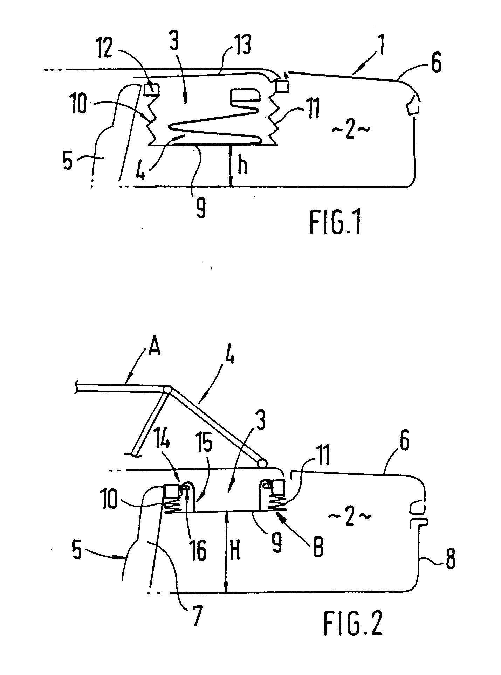

Fig. 1 zeigt einen hinteren Teil eines Kraftfahrzeuges 1 mit einem Kofferraum 2, einem Verdeckkasten 3 zur versenkten Aufnahme eines zurückgeklappten Verdecks 4 und einen Sitz 5. Der Kofferaum 2 ist über eine schwenkbare Klappe 6 zugänglich, die an ihrem vorderen Ende über nicht näher dargestellte Scharniere am Aufbau angelenkt ist. Der Kofferraum 2 erstreckt sich von der Rückseite einer Rückenlehne 7 des Sitzes 5 bis zu einer aufrechten Heckabschlußwand 8.

Der aus einem Boden 9 und Seitenwänden 10, 11 bestehende Verdeckkasten 3 ragt von oben in einen vorneliegenden Teilbereich des Kofferraums 2 hinein und ist erfindungsgemäß zumindest abschnittsweise aus elastischem, nachgiebigem Material hergestellt. Gemäß Fig. 1 ist ein steifer Boden 9 vorgesehen, der über ziehharmonikaartig ausgebildete Seitenwände 10, 11 mit einem feststehenden oberen Rahmen 12 des Verdeckkastens 3 verbunden ist. Der Rahmen 12 ist in der Draufsicht gesehen, etwa rechteckförmig ausgebildet.

Der wesentliche Vorteil der elastischen Ausbildung des Verdeckkastens 3 besteht darin, daß bei geschlossenem Verdeck A der Verdeckkasten 3 in Höhenrichtung zusammenschiebbar ist, wodurch sich die nutzbare Höhe des Kofferraums 2 unterhalb des Verdeckkkastens von einem Maß h auf das Maß H vergrößern läßt. Somit steht bei geschlossenem Verdeck A ein wesentlich größeres Fassungsvolumen des Kofferraums 2 zur Verfügung (Fig. 2).

Die in Fahrzeuglängs- und -querrichtung verlaufenden Seitenwände 10, 11 des Verdeckkastens 3 sind aus Kunststoff, Stoff oder dergleichen gefertigt. Nach oben hin ist der Verdeckkasten 3 mittels eines schwenkbaren Deckels 13 verschlossen, der in nicht näher dargestellter Weise an seinem hinteren Ende drehbar an der Karosserie gelagert ist.

Zum Fixieren des zusammengeschobenen Verdeckkastens 3 ist eine Arretiereinrichtung 14 vorgesehen, die beispielsweise aus einem am Boden 9 angebrachten Haken 15 besteht, der in eine Lasche 16 des oberen Rahmens 12 einhängbar ist. Ferner kann der Boden 9 über eine Vorrichtung (z. B. über ein Gestänge) derart mit dem Verdeck 4 gekoppelt werden, daß der Boden 9 je nach Stellung des Verdecks 4 zwangsweise angehoben oder abgesenkt wird.

## Patentansprüche

1. Versenkbares Verdeck (4), insbesondere für Kraftfahrzeuge, das von einer aufgerichteten Schließstellung (A) in eine zurückgeklappte, versenkte Stellung bewegbar ist und umgekehrt, wobei sich das Verdeck (4) in der versenkten Stellung in einem heckseitigen, benachbart dem Kofferraum angeordneten Verdeckkasten (3) befindet, der sich aus einem Boden (9) und aufrechten Seitenwandungen (10, 11) zusammensetzt, dadurch gekennzeichnet, daß der von oben in einen Teilbereich des Kofferraums (2) hineinragende Verdeckkasten (3) zumindest abschnittsweise aus elastischem, nachgiebigem Material besteht und daß in Schließstellung (A) des Verdecks (4) der Verdeckkasten (3) in Höhenrichtung zusammenschiebbar ist.

2. Versenkbares Verdeck nach Anspruch 1, dadurch gekennzeichnet, daß der Verdeckkasten (3) einen starren Boden (9) und ziehharmonikaartig ausgebildete Seitenwände (10, 11) aufweist, wobei die Seitenwände (10, 11) mit einem feststehenden oberen Rahmen (12) des Verdeckkastens (3) verbunden sind.

3. Versenkbares Verdeck nach Anspruch 1, dadurch gekennzeichnet, daß die Seitenwände (10, 11) des Verdeckkastens (3) aus Kunststoff, Stoff oder dergleichen gefertigt sind.

4. Versenkbares Verdeck nach Anspruch 1, dadurch gekennzeichnet, daß der Verdeckkasten (3) mittels einer Arretiereinrichtung (14) in seiner zusammengefalteten Stellung (B) gehalten wird.

5. Versenkbares Verdeck nach Anspruch 4, dadurch gekennzeichnet, daß die Arretiereinrichtung (14) am Boden (9) angeordnete Haken (15) umfaßt, die in Laschen (16) des oberen Rahmens (12) des Verdeckkastens (3) einhängbar sind.

6. Versenkbares Verdeck nach Anspruch 1, dadurch gekennzeichnet, daß der Boden (9) des Verdeckkastens (3) über eine Vorrichtung mit dem Verdeck (4) gekoppelt ist, dergestalt, daß er nach je Stellung des Verdecks (4) zwangsweise angehoben bzw. abgesenkt wird.

7. Versenkbares Verdeck nach Anspruch 1, dadurch gekennzeichnet, daß der Verdeckkasten (3) zum feststehenden oberen Rahmen (12) hin zusammenschiebbar ist.

## Claims

1. A lowerable cover (4), in particular for motor vehicles, movable from an upright closed position (A) into a folded, lowered position and *vice versa*, the cover (4) in the lowered position being situated in a cover casing (3) at the rear which is arranged adjacent to the boot and comprises a base (9) and upright side walls (10, 11), **characterized in that** the cover casing (3) extending downwards into a partial area of the boot (2) consists at least in part of resilient, yielding material, and in the closed position (A) of the cover (4) the cover casing (3) can be folded in the vertical direction.

2. A lowerable cover according to Claim 1, **characterized in that** the cover casing (3) has a rigid base (9) and side walls (10, 11) constructed in the manner of a concertina, the side walls (10, 11) being connected to a stationary upper frame (12) of the cover casing (3).

3. A lowerable cover according to Claim 1, **characterized in that** the side walls (10, 11) of the cover casing (3) are produced from plastics material, fabric or the like.

4. A lowerable cover according to Claim 1, **characterized in that** the cover casing (3) is held in its folded position (B) by means of a locking device (14).

5. A lowerable cover according to Claim 4, **characterized in that** the locking device (14) comprises hooks (15) arranged on the base (9) and suspensible in lugs (16) on the upper frame (12) of the cover casing (3).

6. A lowerable cover according to Claim 1, **characterized in that** the base (9) of the cover casing (3) is connected to the cover (4) by way of a device, in such a way that it can be forcibly raised or lowered depending upon the position of the cover (4).

7. A lowerable cover according to Claim 1, **characterized in that** the cover casing (3) can be folded up towards the stationary upper frame (12).

## Revendications

1. Capote (4) escamotable, en particulier pour véhicule automobile, qui est déplaçable d'une position fermée (A) dépliée à une position rabattue, escamotée et inversement, la capote (4) en position escamotée se trouvant dans un caisson (3), placé à l'arrière à côté du coffre à bagages, qui se compose d'un fond 9 et de parois latérales (10, 11) verticales, caractérisée en ce que le caisson (3) de la capote, pénétrant à partir du haut dans une partie du coffre à bagages (2), est réalisé au moins en partie, dans un matériau élastique, souple, et en ce qu'en position fermée (A) de la capote (4), le caisson (3) peut être replié dans le sens de la hauteur.

2. Capote escamotable selon la revendication 1, caractérisée en ce que le caisson (3) de la capote comporte un fond (9) rigide et des parois latérales (10, 11) en accordéon, les parois latérales (10, 11) étant assemblées avec un cadre supérieur (12) fixe du caisson (3).

3. Capote escamotable selon la revendication 1, caractérisée en ce que les parois latérales (10, 11) du caisson (3) sont en matière plastique, en tissu ou en matériau similaire.

4. Capote escamotable selon la revendication 1, caractérisée en ce que le caisson (3) est maintenu dans sa position (B) repliée, au moyen d'un dispositif de blocage (14).

5. Capote escamotable selon la revendication 4, caractérisée en ce que le dispositif de blocage (14) comprend des crochets (15) placés sur le fond (9), qui peuvent s'accrocher dans des pattes (16) du cadre (12) supérieur du caisson (3).

6. Capote escamotable selon la revendication 1, caractérisée en ce que le fond (9) du caisson (3) est accouplé avec la capote (4), par l'intermédiaire d'un dispositif, de manière que suivant la position de la capote (4) il soit nécessairement relevé ou abaissé.

7. Capote escamotable selon la revendication 1, caractérisée en ce que le caisson (3) est repliable vers le cadre (12) supérieur fixe.
